# EUROPEAN PATENT SPECIFICATION

(11) **EP 3 974 257 B1**
(45) Date of publication and mention of the grant of the patent: **31.01.2024**
(21) Application number: 20841201.5
(22) Date of filing: 14.07.2020
(51) Int. Cl.: B60R 7/06, B60R 7/04

(54) **AUXILIARY DASHBOARD MOUNTING ASSEMBLY FOR VEHICLE, AND AUTOMOBILE**
HILFSARMATURMONTAGANORDNUNG FÜR EIN FAHRZEUG UND FAHRZEUG
ENSEMBLE DE MONTAGE DE TABLEAU DE BORD AUXILIAIRE POUR VÉHICULE ET AUTOMOBILE

(30) Priority: 17.07.2019 CN 201910645331
(43) Date of publication of application: 30.03.2022
(73) Proprietor: Great Wall Motor Company Limited, Baoding, Hebei 071000 (CN)
(72) Inventor: CHEN, Yulong, Baoding, Hebei 071000 (CN); GUO, Jinggang, Baoding, Hebei 071000 (CN); ZOU, Yunsheng, Baoding, Hebei 071000 (CN); HU, Jianguang, Baoding, Hebei 071000 (CN); ZHANG, Jiankai, Baoding, Hebei 071000 (CN); ZHANG, Weisheng, Baoding, Hebei 071000 (CN)
(74) Representative: Klunker IP Patentanwälte PartG mbB
(86) International application number: PCT/CN2020/101914
(87) International publication number: WO 2021/008526

(56) References cited:
- CN-A- 103 465 833
- CN-A- 111 347 877
- CN-U- 205 930 538
- CN-U- 207 711 934
- CN-U- 208 993 775
- CN-U- 209 096 840
- FR-A1- 2 789 641
- US-A- 6 135 529
- US-A1- 2002 145 023

## Description

### CROSS REFERENCE TO RELATED APPLICATION

The application claims priority to Chinese Patent Application No. 201910645331.3 submitted to China National Intellectual Property Administration on July 17, 2019 and entitled "VEHICLE AUXILIARY INSTRUMENT PANEL MOUNTING AS SEMBLY AND VEHICLE".

### TECHNICAL FIELD

The disclosure belongs to the technical field of vehicles and, more particularly, relates to a vehicle instrument panel mounting assembly and a vehicle.

### BACKGROUND

With the continuous development of social economy, people's living standards are increasingly improved, and vehicles have become one of the most important means of transportation. With the continuous increase of the number of vehicles, people have higher and higher requirements for the refinement of vehicle interiors, and the vehicle interiors intend to be developed in improving the comfort and refinement.

In the prior art, the auxiliary instrument panel is fixed on a floor of a vehicle and cannot be moved. For a vehicle having a larger rear space, the fixed auxiliary instrument panel cannot be used well by rear passengers, and thus is poor in use convenience.
US 2002/0145023 A1 discloses a device for the passenger compartment of a motor vehicle comprising a central console. The device includes a slideway intended to be fixed to the passenger compartment of the vehicle, extending in a longitudinal direction of elongation, and having a lateral opening also extending in that longitudinal direction, and guiding and retaining means sliding within the slideway, said guiding and retaining means extending through said lateral opening and being linked to the console. The device also includes a locking assembly with a handle provided on the upper side of the console.

### SUMMARY

An objective of the disclosure is to provide a vehicle auxiliary instrument panel mounting assembly, which aims to solve the problems in the prior art that an auxiliary instrument panel is fixed on a floor to be unable to move and is poor in use convenience.

In order to achieve the above objective, the disclosure adopts a technical solution that a vehicle auxiliary instrument panel mounting assembly is provided, including:
a floor, which is provided with a chute extending in a front-rear direction of a vehicle body, a wall of the chute being provided with at least two groups of locking holes spaced in an extension direction of the chute; and the floor being provided with limiting parts in one-to-one corresponding to the at least two groups of locking holes; and
an auxiliary instrument panel where a bottom is located in the chute and can moves along the chute, a front side plate or a rear side plate of the auxiliary instrument panel is provided with a first clasp, a locking part connected with the first clasp is arranged inside the auxiliary instrument panel and is inserted into one group of the locking holes, the locking part has an unlocking state in which the locking part moves to be separated from one group of the locking holes due to pulling of the first clasp, and the locking part also has a locking state in which the locking part is locked in one group of the locking holes due to contact with the limiting parts.

Further, the locking part includes a rotating part and a first locking block connected with the rotating part; and the rotating part is used to drive the first locking block to rotate so that the first locking block is separated from the locking hole or inserted into the locking hole.

Further, the first clasp is connected with the locking part through a connecting part; the connecting part is provided with a first oblique plane on a left or right side of the rotating part, and the first oblique plane inclines from the periphery of the rotating part to the center of the rotating part; and
when the connecting part moves to the first clasp, the first oblique plane is used to abut against the rotating part to push the rotating part to rotate towards a direction away from the locking hole.

Further, each of the limiting parts is provided with a second oblique plane which is used to abut against the rotating part to limit the movement of the rotating part in the front-rear direction of the vehicle body.

Further, the rotating part is provided with a first elastic element, one end of the first elastic element is fixed on the rotating part, and the other end of the first elastic element is connected with an inner wall of the auxiliary instrument panel; and
when the auxiliary instrument panel moves to a bottom of the rotating part and is in contact with one of the limiting parts, the first elastic element is used to pull the rotating part to rotate towards a direction close to the locking hole.

Further, each group of the locking holes includes a first locking hole and a second locking hole respectively formed in one side wall of the chute, and a third locking hole formed in the other side wall of the chute; the first locking block is used to insert into the first locking hole; and
the locking part also includes a second locking block used to insert into the second locking hole, and a third locking block used to insert into the third locking hole.

Further, a second elastic element is connected between the second locking block and the third locking block, and the second elastic element is used to drive the second locking block and the third locking block to rotate so that the second locking block and the third locking block are separated from the second locking hole and the third locking hole respectively;
the connecting part is provided with two pressing blocks in sliding connection with a top surface of the second locking block and a top surface of the third locking block respectively, and the two pressing blocks can slide towards the first clasp to be separated from the second locking block and the third locking block respectively; and
the two pressing blocks are respectively used to abut against the second locking block and the third locking block to limit that the second locking block and the third locking block rotate to be separated from the second locking hole and the third locking hole.

Further, the pressing blocks are provided with third oblique planes obliquely inclining upwards. The two third oblique planes are used to connect with a side surface, close to the first clasp, of the second locking block, and a side surface, close to the first clasp, of the third locking block in a pressing manner respectively, so that the second locking block and the third locking block rotate, and are inserted into the second locking hole and the third locking hole.

Further, the third locking block is located between the first locking block and the second locking block; a connecting plate connected with the connecting part is arranged on one side, close to the first clasp, of the second locking block;
a third elastic element extending or retracting in the front-rear direction of the vehicle body is arranged between one end, connected with the first clasp, of the connecting part and the connecting plate; and
the connecting part is also provided with an abutting block, in the unlocking state, the abutting block abuts against a side surface of the rotating part, and in the locking state, the abutting block is separated from the rotating part.

Further, the auxiliary instrument panel includes a storage table and a placement table connected with a rear side of the storage table; the first clasp is arranged on a front side plate of the storage table.

A left side and/or a right side of the placement table are/is provided with a support table.

The placement table is also connected with an overturning table plate which can be overturned relative to the placement table. The overturning table plate has an expansion state in which the overturning table plate ascends and is overturned relative to the placement table until a plate surface of overturning table plate is parallel to a placement surface of the placement table, and the overturning table plate also has a closed state in which the overturning table plate is overturned and descends relative to the placement table until the plate surface is perpendicular to the placement surface of the placement table. When the overturning table plate is in the expansion state, one end of the overturning table plate is in lap joint with the support table, and the other end of the overturning table plate is a free end and extends to the exterior of the placement table. When the overturning table plate is in the closed state, the overturning table plate is located between the placement table and the support table.

Further, the overturning table plate is provided with a lap joint block, and a top of the support table is provided with an overturning part. When the overturning table plate ascends until the lap joint block is in contact with the overturning part, the lap joint block abuts against the overturning part to limit the ascending of the overturning table plate. When the overturning table plate is in the expansion state, the lap joint block is in lap joint with the overturning part, and a side surface of the overturning table plate abuts against a side surface of the placement table.

Further, a rotating shaft and a support component are arranged inside the placement table. The placement table can be overturned relative to the storage table along the rotating shaft, and the placement table has a buckled state in which the placement table is overturned relative to the storage table until the placement surface is perpendicular to a top surface of the storage table, and the placement table also has an open state in which the placement table is overturned relative to the storage table until the placement surface is parallel to the top surface of the storage table. When the placement table is in the open state, the support component is used to support the placement table.

Further, the support component includes:
a gas strut in which a fixed end is fixedly connected with the interior of the storage table, and a lifting end is fixedly connected with the interior of the placement table; and
a support block in which one end is arranged inside the storage table in a hinging manner, the other end is a free end, the free end abuts against the interior of the placement table when the placement table is in the open state, and the support block is used to support the placement table.

Further, a second clasp is arranged on the side surface of the placement table and extends to the interior of the placement table, and an extension part is provided with a first hook.

The interior of the storage table is provided with a second hook which extends into the interior of the placement table and is hooked with the first hook.

When the placement table is in the buckled state, the side surface, on which the second clasp is located, of the placement table is parallel to the top surface of the storage table, and the first hook is hooked with the second hook.

Compared with the prior art, the vehicle auxiliary instrument panel mounting assembly provided by the disclosure has the following beneficial effects: the chute is formed in the floor, the wall of the chute is provided with the at least two groups of locking holes; in the locking state, the locking part of the auxiliary instrument panel is inserted into one group of locking holes, and can be unlocked by pulling the first clasp; and in the unlocking state, the auxiliary instrument panel can slide in the chute, and can move to a required position according to use demands of a passenger, and the locking part is relocked when in contact with the limiting part nearby the required position. According to the vehicle auxiliary instrument panel mounting assembly provided by the disclosure, the fixed position of the auxiliary instrument panel on the floor is changed by inserting the locking part into different locking holes, so that the fixed position of the auxiliary instrument panel is adjustable to satisfy the use demands of the passenger.

The disclosure further provides a vehicle, including the above vehicle auxiliary instrument panel mounting assembly.

The vehicle provided by the disclosure has the same beneficial effects as the vehicle auxiliary instrument panel mounting assembly, which will not be repeated here.

The above description is only an overview of the technical solutions of the disclosure. In order to better understand the technical means of the disclosure, it can be implemented according to the contents of the description, and in order to make the above and other objectives, features and advantages of the disclosure more obvious and easy to understand, the specific examples of the disclosure are set forth below.

### BRIEF DESCRIPTION OF THE DRAWINGS

In order to illustrate more clearly the examples of the disclosure or the technical solutions in the prior art, a simple introduction will now be made to the drawings required for the examples or the description in the prior art. Obviously, the drawings in the following description are some examples of the disclosure, and those of ordinary skill in the art also can obtain other drawings according to these drawings without doing creative work.
Fig. 1 schematically shows a structural schematic diagram I of a vehicle auxiliary instrument panel mounting assembly provided by an example of the disclosure;
Fig. 2 schematically shows a structural schematic diagram II of a vehicle auxiliary instrument panel mounting assembly provided by an example of the disclosure;
Fig. 3 schematically shows a structural schematic diagram of a floor of a vehicle auxiliary instrument panel mounting assembly provided by an example of the disclosure;
Fig. 4 schematically shows an enlarged view of A in Fig. 3;
Fig. 5 schematically shows a structural schematic diagram of the interior of a vehicle auxiliary instrument panel mounting assembly provided by an example of the disclosure (only a left half part of a first housing is shown);
Fig. 6 schematically shows a structural schematic diagram of connection of a locking part, a connecting part and a floor in Fig. 5;
Fig. 7 schematically shows a structural schematic diagram from another angle of Fig. 6;
Fig. 8 schematically shows a structural schematic diagram of connection between a locking part and a connecting part of a vehicle auxiliary instrument panel mounting assembly provided by an example of the disclosure;
Fig. 9 schematically shows an internal structure diagram of a placement table in a buckled state and an overturning table plate in a closed state provided by an example of the disclosure (an overall structure of a first housing in the figure is shown);
Fig. 10 schematically shows an internal structure diagram of a placement table in an open state and an overturning table plate in an expansion state provided by an example of the disclosure (only left half parts of a first housing and a second housing are shown in the figure);
Fig. 11 schematically shows a structural schematic diagram of the interior of a placement table provided by an example of the disclosure (the overturning table plate is in a closed state in the figure);
Fig. 12 schematically shows a structural schematic diagram of an overturning table in an expansion state provided by an example of the disclosure; and
Fig. 13 schematically shows a structural schematic diagram of an overturning table plate in a closed state provided by an example of the disclosure.

### DETAILED DESCRIPTION

In order to make the technical problems to be solved, technical solutions and beneficial effects of the disclosure clearer, the disclosure is further described in detail below in combination with the drawings and examples. It should be understood that specific examples described herein are only used to explain the disclosure and are not used to limit the disclosure.

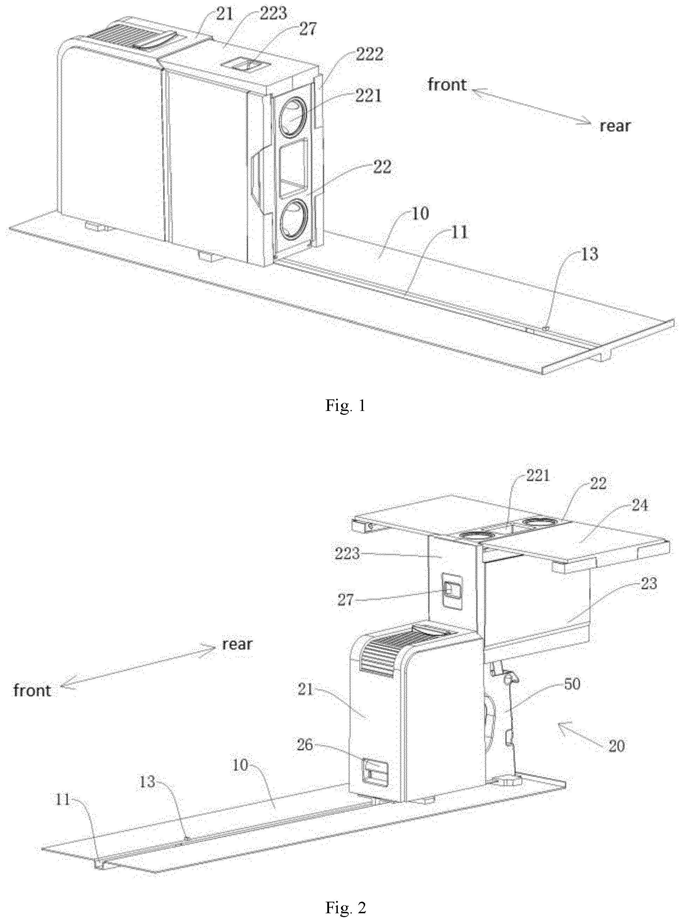

Referring to Figs. 1-3, a vehicle auxiliary instrument panel mounting assembly provided by the disclosure is now described. The vehicle auxiliary instrument panel mounting assembly includes a floor 10 and an auxiliary instrument panel 20 slidably arranged on the floor 10.

The floor 10 is provided with a chute 11 extending in a front-rear direction of a vehicle body, and a wall of the chute 11 is provided with at least two groups of locking holes spaced in an extension direction of the chute 11; and the floor 10 is provided with limiting parts 13 in one-to-one corresponding to the at least two groups of locking holes, referring to Figs. 1-3.

A bottom of the auxiliary instrument panel 20 is located in the chute 11 and can move along the chute 11. A locking part 30 is arranged inside the auxiliary instrument panel 20, and a front side plate or a rear side plate of the auxiliary instrument panel 20 is provided with a first clasp 26 which is connected with the locking part 30 and used to pull the locking part 30 to move. The locking part 30 is inserted into one group of the locking holes. The locking part 30 has an unlocking state in which the locking part 30 moves to be separated from one group of the locking holes due to pulling of the first clasp, and the locking part 30 also has a locking state in which the locking part 30 is locked in one group of the locking holes due to contact with the limiting parts 13, referring to Fig. 1 and Fig. 2 and Fig. 8.

It should be noted that in the example, the floor 10 refers to the floor 10 laid inside a vehicle, and the chute 11 is formed along the front-rear direction of the vehicle body. A front end of the chute 11 is located between a driver seat and a front passenger seat, and a rear end of the chute 11 is located between a rear seat and a front seat.

According to the vehicle auxiliary instrument panel mounting assembly provided by the disclosure, when the auxiliary instrument panel 20 is in the locking state, the locking part 30 is inserted into one group of the locking holes, and can be unlocked by pulling the first clasp 26. The auxiliary instrument panel 20 can move in the chute 11 in the unlocking state, and is relocked when the locking part 30 is in contact with the limiting parts 13.

Compared with the prior art, the vehicle auxiliary instrument panel mounting assembly provided by the disclosure is as follows: the auxiliary instrument panel 20 can move back and forth in the vehicle body, and a fixed position of the auxiliary instrument panel 20 on the floor 10 can be changed by inserting the locking part 30 into different locking holes, thereby realizing the adjustable fixed position of the auxiliary instrument panel 20; and a passenger in the vehicle can adjust the fixed position of the auxiliary instrument panel 20 according to use demands (if a front passenger needs to use the auxiliary instrument panel 20 to place a water cup, a mobile phone, a book or other articles, the auxiliary instrument panel 20 can be locked in the group of the locking holes at the front; and if a rear passenger needs to use the auxiliary instrument panel 20 to place articles or needs to use the auxiliary instrument panel 20 as a desk to place a book, a laptop or other articles, the auxiliary instrument panel 20 can be locked in the group of the locking holes at the rear), thereby satisfying the use demands of different passengers.

Specifically, a first housing 50 is arranged inside the auxiliary instrument panel 20, a bottom of the first housing 50 is embedded in the chute 11, and the auxiliary instrument panel 20 is in sliding connection with the chute 11 through the first housing 50. The locking part 30 and a connecting part 40 are both located in the first housing 50. An operating end of the first clasp 26 is arranged on the front side plate of the auxiliary instrument panel 20, and the first clasp 26 extends into the first housing 50 to be connected with the connecting part 40.

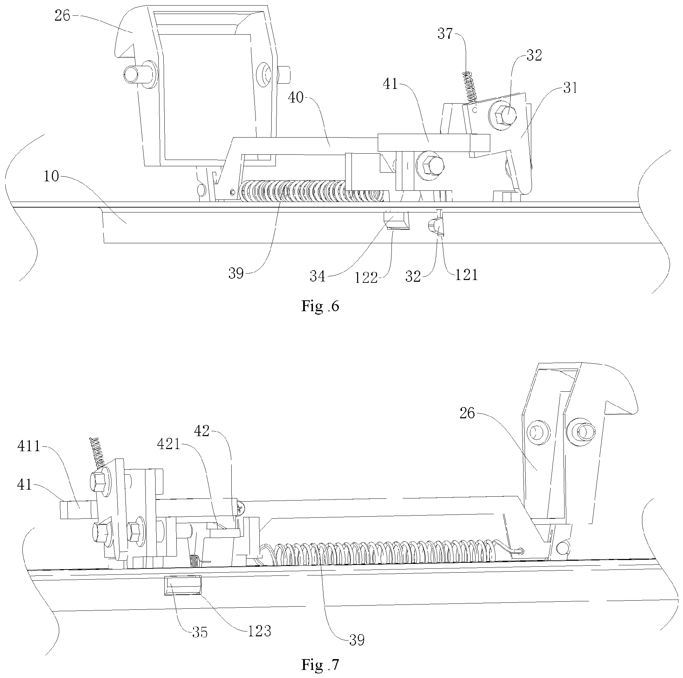

Referring to Figs. 6-8, as a specific example of the vehicle auxiliary instrument panel mounting assembly provided by the disclosure, the locking part 30 includes a rotating part 31 and a first locking block 32 connected with the rotating part 31; and the rotating part 31 is used to drive the first locking block 32 to rotate to be separated from the locking hole or inserted into the locking hole. Specifically, the locking hole includes a first locking hole 121 formed in one side wall of the chute 11, and the first locking block 32 is matched with the first locking hole 121 in an insertion manner.

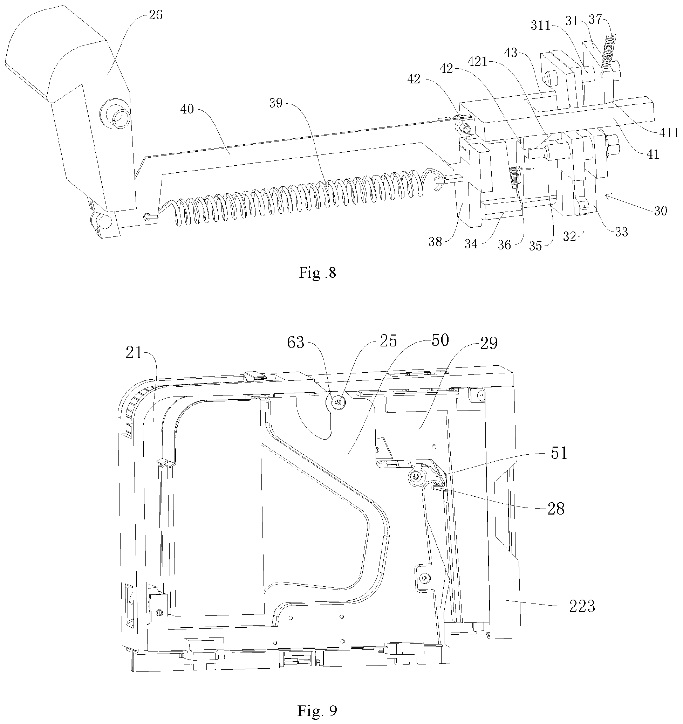

The first clasp 26 is connected with the locking part 30 through the connecting part 40; and the connecting part 40 is provided with a push rod 41, and a rear end of the push rod 41 is located behind the rotating part 31. The push rod 41 is provided with a first oblique plane 411 located on a left or right side of the rotating part 31. The first oblique plane 411 is arranged vertically. The first oblique plane 411 inclines from the periphery of the rotating part 31 to the center of the rotating part 31, a front side edge of the first oblique plane 411 is located in front of the rotating part 31, and a rear side edge of the first oblique plane 411 is located behind the rotating part 31, as shown in Fig. 7 or Fig. 8.

Specifically, the rotating part 31 is of a plate-like structure, the rotating part 31 is located behind the first locking block 32, and is connected with the first locking block 32 through a connecting shaft 311. In order to drive the first locking block 32 to rotate when the rotating part 31 rotates, the connecting shaft 311 is fixedly connected with the rotating part 31 and the first locking block 32.

When the first locking block 32 needs to be unlocked, the first clasp 26 is manually pulled upwards, and the first clasp 26 drives the connecting part 40 to move forwards; when the connecting part 40 moves, the first oblique plane 411 abuts against a rear plate surface and a side of the rotating part 31, and can drive the rotating part 31 to slightly deflect and rotate; and the rotating part 31 drives the first locking block 32 to rotate towards a direction away from the first locking hole 121 through the connecting shaft 311, and the first locking block 32 is separated from the first locking hole 121 to be unlocked.

In the above unlocking process, the first locking block 32 can be unlocked by manually pulling the first clasp 26 upwards, so that the operation mode is easy. By moving the first oblique plane 411 forwards to push the rotating part 31 to rotate towards the direction away from the first locking hole 121, it can be ensured that the first locking block 32 rotates to be separated from the first locking hole 121 to be unlocked.

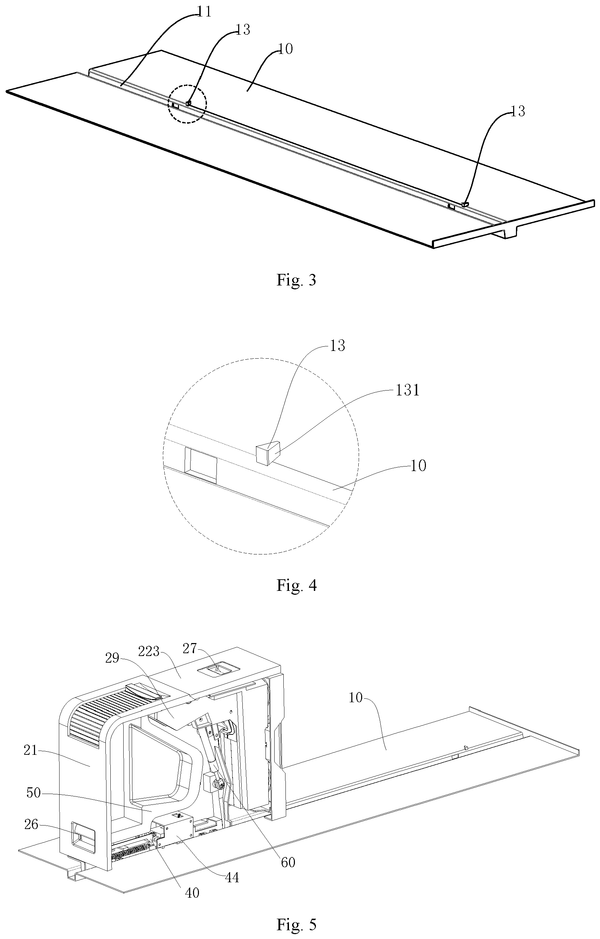

Referring to Fig. 3 and Fig. 8, as a specific example of the vehicle auxiliary instrument panel mounting assembly provided by the disclosure, each of the limiting parts 13 is located behind the corresponding locking hole, and each of the limiting parts 13 is provided with a second oblique plane 131. Specifically, the limiting parts 13 are of a block structure, a side surface of each of limiting parts 13 is the second oblique plane 131 which is vertically arranged and inclines from a side part of the floor 10 to the center, referring to Fig. 4. An outer side surface of each of the limiting parts 13 protrudes outwards from the rotating part 31.

Specifically, two limiting parts 13 are provided and are respectively located at a front part and a rear part of the chute 11, and the two oblique planes 131 opposite to each other, that is, the second oblique plane 131 located at the limiting part 13 in front faces backwards and the second oblique plane 131 located at the limiting part 13 in rear faces forwards. The auxiliary instrument panel slides between the two limiting parts 13.

The rotating part 31 is provided with a first elastic element 37, one end of the first elastic element 37 is fixed on the rotating part 31, the other end of the first elastic element 37 is connected with an inner wall of the auxiliary instrument panel 20, and specifically, the other end of the first elastic element 37 is connected with the first housing 50.

Since an external side surface of the limiting parts 13 protrude from the rotating part 31 outwards, when the rotating part 31 is in contact with the second oblique plane 131 of the limiting parts 13, the second oblique plane 131 abuts against a bottom end of the rotating part 31 to restrict the forward and backward movement of the rotating part 31. At the moment, the first housing 50 continues to move, the first elastic element 37 pulls the rotating part 31 to rotate under driving of the first housing 50, the rotating part 31 drives the first locking block 32 to rotate through the connecting shaft 311, and the first locking block 32 is locked in the first locking hole 121 again, and thus locking is finished.

It should be noted that when the rotating part 31 is in contact the second oblique plane 131, the first locking block 32 directly faces the first locking hole 121.

In the above locking process, the first locking block 32 is locked through the contact between the rotating part 31 and the second oblique plane 131. The locking state can be achieved without manual operation as long as a passenger pushes the auxiliary instrument panel 20 in place, and thus the operation is easy and convenient.

In order to further improve the locking strength of the locking part 30, on the basis of the above example, each group of the locking holes includes a second locking hole 122 formed in one side wall of the chute 11 and a third locking hole 123 formed in the other side wall of the chute 11. Correspondingly, the locking part 30 also includes a second locking block 34 used to insert into the second locking hole 122 and a third locking block 35 used to inserted into the third locking hole 123, referring to Fig. 6 and Fig. 7.

The first locking block 32, the second locking block 34 and the third locking block 35 cooperate to jointly complete the unlocking or locking. Compared with only one locking block, the locking part 30 has a more stable locking state or unlocking state, and does not change the state under other external forces acted manually.

A second elastic element 36 is connected between the second locking block 34 and the third locking block 35. One end of the second elastic element 36 props against a side surface, away from the second locking hole 122, of the second locking block 34, and the other end of the second elastic element 36 props against a side surface, away from the third locking hole 123, of the third locking block 35. When the second locking block 34 and the third locking block 35 are in the locking state, the second elastic element 36 is in a torsion state and has a torsion force. Specifically, the second elastic element is a torsion spring.

The connecting part 40 is provided with two pressing blocks 42 in sliding connection with a top surface of the second locking block 34 and a top surface of the third locking block 35 respectively. In the locking state, the top surface of the second locking block 34 and the top surface of the third locking block 35 are parallel to a surface of the floor 10, and the two pressing blocks 42 are used to apply a pressing force to the second locking block 34 and the third locking block 35, the applied pressing force can overcome the torsion force of the second elastic element 36, thereby limiting that the second locking block 34 and the third locking block 35 rotate to be separated from the second locking hole 122 and the third locking hole 123.

When the locking part 30 needs to be unlocked, the first clasp 26 is manually pulled upwards, and the first clasp 26 drives the connecting part 40 to move forwards; and when the connecting part 40 moves, on the one hand, the movement of the first oblique plane 411 drives the rotating part 31 to rotate, so that the first locking block 32 can be unlocked, and on the other hand, the connecting part 40 also drives the two pressing blocks 42 to move forwards, the two pressing blocks 42 can slide forwards respectively to be separated from the second locking block 34 and the third locking block 35. The second locking block 34 and the third locking block 35 are no longer subjected to the pressing force, but are only subjected to the torsion force applied by the second elastic element 36. The second elastic element 36 drives the second locking block 34 and the third locking block 35 to rotate, and the second locking block 34 and the third locking block 35 rotate to be separated from the second locking hole 122 and the third locking hole 123 respectively to be unlocked. In the unlocking state, the top surface of the second locking block 34 and the top surface of the third locking block 35 incline relative to the board surface of the floor 10.

In the above unlocking process, the three locking blocks can be unlocked by manually pulling the first clasp 26 upwards, so that the operation mode is easy and the completion of unlocking can be ensured.

Referring to Fig. 8, On the basis of the above example, the pressing blocks 42 are provided with third oblique planes 421 inclining upwards, and the third oblique planes 421 are inclining upwards from front to back, that is, as shown in Fig. 8, the third oblique planes 421 extend obliquely upwards from a left side to a right side of the figure. When the locking part 30 is in the locked state, the two third oblique planes 421 are not in contact with the second locking block 34 and the third locking block 35. When the locking part 30 is in the unlocking state, the two pressing blocks 42 are located in front of the second locking block 34 and the third locking block 35 respectively, and the two third oblique planes 421 face the second locking block 34 and the third locking block 35 respectively.

It should be noted that when the first locking block 32 corresponds to the first locking hole 121, the second locking block 34 and the third locking block 35 also correspond to the second locking hole 122 and the third locking hole 123 respectively.

After the first locking block 32 is locked, the first clasp 26 can be manually pushed downwards (of course, other methods can also be used to move the connecting part 40 backwards), so that the two pressing blocks 42 move backwards, and the two third oblique planes 421 move towards the second locking block 34 and the third locking block 35 respectively. Since the top surface of the second locking block 34 and the top surface of the third locking block 35 incline relative to the surface of the floor 10 at the moment, the second locking block 34 and the third locking block 35 rotate when pressed by the third oblique planes 421 and bottom surfaces of the pressing blocks 42 until the top surfaces of the two locking blocks are parallel to the surface of the floor 10 again. The second locking block 34 and the third locking block 35 are inserted into the second locking hole 122 and the third locking hole 123 again respectively to be locked.

The pressing blocks 42 move backwards and extrude the two locking blocks, so that the two locking blocks rotate to be locked. The whole locking process can be achieved by only moving the connecting part 40 backwards. Therefore, the locking mode is reliable and the operation mode is easy.

When the second locking block 34 and the third locking block 35 are locked, the connecting part 40 needs to be pushed backwards, and the backward movement of the connecting part 40 can be realized not only by manually pushing the first clasp 26 downwards, but also by arranging a component which has a mutual limiting effect with the connecting part 40 on the locking part 30. In order to achieve the above objective, on the basis of the above example, a connecting plate 38 is arranged in front of the locking block on the front side (i.e., the second locking block 34 in the figure), a third elastic element 39 is arranged between one end, connected with the first clasp 26, of the connecting part 40 and the connecting plate 38, and an abutting block 43 is arranged on the connecting part 40, referring to Fig. 8. When the first locking block 32 is in the unlocking state, a rear side surface of the butting block 43 abuts against a front side surface of the rotating part 31. When the first locking block 32 is in the locking state, the abutting block 43 and the rotating part 31 are not in a connection relationship, and the rear side of the abutting block 43 is located behind the rotating part 31.

Specifically, the connecting plate 38, the second locking block 34, the third locking block 35, the first locking block 32 and the rotating part 31 are arranged in sequence from front to back.

When the first clasp 26 is manually pulled upwards, the first clasp 26 may drive the connecting part 40, the push rod 41, the pressing blocks 42 and the abutting block 43 to move forwards. At the same time, the rotating part 31 and the first locking block 32 may rotate towards the direction away from the first locking hole 121 (that is, the first locking block 32 may rotate to a side wall without the first locking hole 121), the second locking block 34 and the third locking block 35 may also rotate towards the direction away from the second locking hole 122 and the third locking hole 123 respectively, and thus the locking part 30 is unlocked. After unlocking, the state of the locking part 30 may not be changed. When the first clasp 26 is no longer pulled manually, the first clasp 26 drives the connecting part 40 to move backwards. Due to the deflection of the rotating part 31, the abutting block 43 may abut against the front side surface of the rotating part 31 when moving backwards, and the rotating part 31 limits the continuous backward movement of the abutting block 43. That is, after the first clasp 26 is not subjected to an external force, if the locking part 30 is in the unlocking state, the connecting part 40 cannot return to the position in the locking state, and at the moment, the third elastic element 39 is compressed.

When the auxiliary instrument panel 20 moves in place and the rotating part 31 is in contact with the second oblique planes 131 of the limiting parts 13, the rotating part 31 rotates, and the first locking block 32 also rotates to be locked in the first locking hole 121 again, so that the first locking block 32 is locked. At the moment, the rotating part 31 removes the limiting effect on the abutting block 43, the connecting part 40 moves backwards under an elastic force of the third elastic element 39, and then drives the pressing blocks 42 to move backwards, the third oblique planes 421 and the bottom surfaces of the pressing blocks 42 squeeze the second locking block 34 and the third locking block 35 to rotate, and thus the second locking block 34 and the third locking block 35 are inserted into the second locking hole 122 and the third locking hole 123 again respectively to be locked.

The unlocking and relocking process of the locking part 30 can be realized only by manually pulling the first clasp 26 upwards once, so that the operation mode is easy and suitable for any passenger. The unlocking and relocking are completed through the mechanical cooperation between the locking part 30 and the connecting part 40, the degree of automation is high, and the process is stable and reliable.

Specifically, an intermediate baffle 33 is also arranged between the rotating part 31 and the first locking block 32. When the locking part 30 is in the locking state, the rear side surface of the abutting block 43 abuts against a front side surface of the intermediate baffle 33. After the first locking block 32 rotates to be inserted into the first locking hole 121, the connecting part 40 moves backwards until the abutting block 43 is in contact with the intermediate baffle 33. The intermediate baffle 33 is used to limit the displacement of the connecting part 40 in the backward movement, thereby avoiding excessive backward movement of the connecting part 40.

Specifically, the periphery of the locking part 30 is also covered with a case 44 which is connected with the first housing 50.

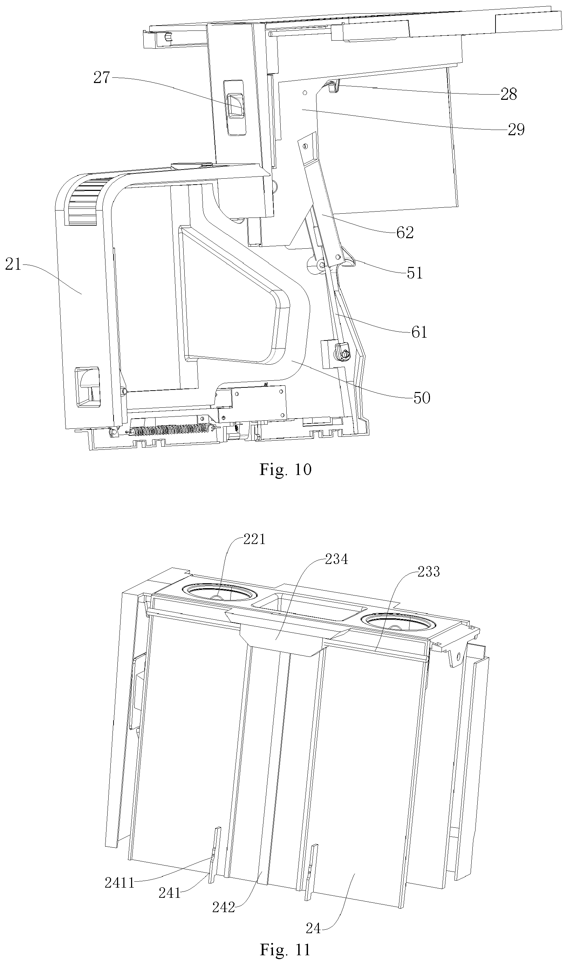

Referring to Figs. 11-13, as a specific example of the vehicle auxiliary instrument panel mounting assembly provided by the disclosure, the auxiliary instrument panel 20 includes a storage table 21 and a placement table 22 connected with a rear side of the storage table 21, and the first clasp 26 is arranged on a front side plate of the storage table 21.

A left side and/or a right side of the placement table 22 are/is provided with a support table 23.

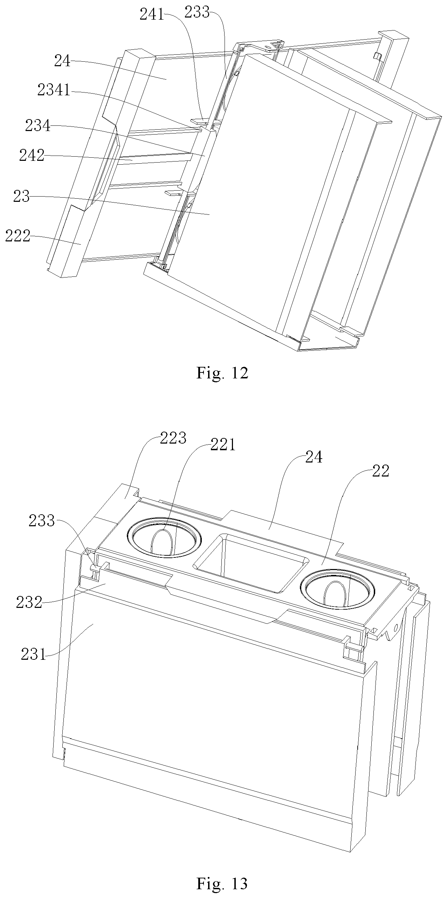

The placement table 22 is also connected with an overturning table plate 24 which can be overturned relative to the placement table 22. The overturning table plate 24 has an expansion state in which the overturning table plate 24 ascends and overturns relative to the placement table 22 until a plate surface of overturning table plate is parallel to a placement surface of the placement table 22, as shown in Fig. 12. The overturning table plate 24 also has a closed state in which the overturning table plate 24 overturns and descends relative to the placement table 22 until the plate surface of overturning table plate is perpendicular to the placement surface of the placement table 22, as shown in Fig. 11 and Fig. 13. When the overturning table plate 24 is in the expansion state, one end of the overturning table plate 24 is in lap joint with the support table 23, and the other end of the overturning table plate 24 is a free end and extends to the exterior of the placement table 22. When the overturning table plate 24 is in the closed state, the overturning table plate 24 is located between the placement table 22 and the support table 23.

It should be noted that the exterior of the placement table 22 refers to a space outside the placement table 22.

The vehicle auxiliary instrument panel mounting assembly of the disclosure can change the position of the auxiliary instrument panel 20 according to the demands of people in the vehicle. If a front passenger needs to use the auxiliary instrument panel 20 to place a water cup, a mobile phone, a book or other articles, the auxiliary instrument panel 20 can be locked in the group of the locking holes at the front; and if a rear passenger needs to use the auxiliary instrument panel 20 to place articles or needs to use the auxiliary instrument panel 20 as a desk to place a book, a laptop or other articles, the auxiliary instrument panel 20 can be locked in the group of the locking holes at the rear.

When the auxiliary instrument panel 20 is used by the rear passenger, the state of the overturning table plate 24 can also be changed. If it is necessary to support articles such as a computer, a notebook or a book for work, the overturning table plate 24 can be lifted upwards. When the overturning table plate 24 is lifted to a position where a lower surface is close to a placement surface of the placement table 22, the overturning table plate 24 can be turned downwards until the plate surface is parallel to a placement surface of the placement table 22, the overturning table plate 24 is in lap joint with the support table 23, the overturning table plate 24 is opened and placed flatly relative to the placement table 22, so that the articles can be placed on the overturning table plate 24. When the articles for work do not need to be used, the overturning table plate 24 is first overturned upwards until the plate surface is perpendicular to a placement surface of the placement table 22, and then is pushed downwards to be arranged between the placement table 22 and the support table 23, so that the overturning table plate 24 is stored and closed, and no longer occupies the space in the vehicle.

According to the auxiliary instrument panel mounting assembly provided by the disclosure, the space in the vehicle is sufficiently utilized; different functions can be realized by changing the state of the overturning table plate 24; the overturning table plate 24 can support the articles for work when placed flatly to meet the demands on working in the vehicle; and the overturning table plate 24 is placed between the placement table 22 and the support table 23 and does not occupy the space in the vehicle, thereby improving the comfort of passengers.

Specifically, the overturning table plate 24 has the same thickness direction as the placement table 22 and the support table 23. The support table 23 can be connected with the placement table 22 through a panel 223 which is arranged on the same side of the support table 23 and the placement table 22. An opening is formed in one side, opposite to the panel 223, of the placement table 22.

Since the support table 23 is only used to support the overturning table plate 24 when the overturning table plate 24 is in a horizontal state, in order to save the space occupied by the vehicle auxiliary instrument panel mounting assembly, a thickness of the support table 23 is designed to be less than that of the placement table 22, and two side surfaces of the support table 23 in a length direction are coplanar with or slightly protrude from two side surfaces of the storage table 22, referring to Fig. 13.

The overturning table plate 24 has the actions of ascending, descending and overturning when changing the state. In order to make the overturning table plate 24 smoothly overturn, ascend and descend, as a specific example of the vehicle auxiliary instrument panel mounting assembly provided by the disclosure, the overturning table plate 24 is provided with a lap joint block 241, and an overturning part is arranged at a top of the support table 23. When the overturning table plate 24 ascends until the lap joint block 241 is in contact with the overturning part, the lap joint block 241 abuts against the overturning part to limit the continuous ascending of the overturning table plate 24. When the overturning table plate 24 is in the expansion state, the lap joint block 241 is in lap joint with the overturning part, and the side surface of the overturning table plate 24 abuts against the side surface of the placement table 22, referring to Fig. 12. When the overturning table plate 24 is in the closed state, the lap joint block 241 is located obliquely below the turnover part, referring to Fig. 11.

Specifically, the lap joint block 241 is arranged on one side surface, close to the support table 23, of the overturning table plate 24, and is close to an edge of the overturning table plate 24. When the overturning table plate 24 changes from the closed state to the expansion state, the overturning table plate 24 first ascends in a gap between the support table 23 and the placement table 22. When the lap joint block 241 touches the overturning part, the lap joint block 241 is limited by the overturning part and cannot continue to move upwards, and the overturning table plate 24 can be only overturned downwards.

Alap joint block 241 is arranged on the overturning table plate 24. When the overturning table plate 24 is in the expansion state, the lap joint block 241 is used to support the overturning table plate 24 to be arranged on the support table 23 on the one hand, and is used to remind the ascending position of the overturning table plate 24 on the other hand, so as to avoid separation of the overturning table plate 24 from the placement table 22 due to excessive ascending of the overturning table plate 24.

In order to further improve the stability of the overturning table plate 24 in the state changing process, on the basis of the above example, the overturning part includes a lap joint rod 233 rotationally arranged on the support table 23, and a slider 234 fixedly arranged on the lap joint rod 233, and a rotation direction of the lap joint rod 233 is the same as that of the overturning table plate 24. The side surface of the overturning table plate 24 is provided with at least two sliding rails 242 that are in sliding fit with the slider 234 and can ascend and descend relative to the slider 234, referring to Fig. 11 and Fig. 12.

The lap joint block 241 is used to be in contact with the lap joint rod 233 to limit the upward movement of the overturning table plate 24. A surface, in contact with the lap joint rod 233, of the lap joint block 241 is a step surface, and a part of the step surface is an arc surface 2411, referring to Fig. 11. When the overturning table plate 24 is in the expansion state, the arc surface 2411 is buckled on the lap joint rod 233.

An extension direction of the sliding rails 242 is the same as an ascending-descending direction of the overturning table plate 24. In the process of upwards lifting or downwards pushing the overturning table plate 24, the slider 234 is always embedded between a plurality of sliding rails 242, the side surface of the slider 234 is close to the surface of the overturning table plate 24, and the vertical inclination of the overturning table plate 24 is limited. In addition to vertical movement, inclination and deflection in a vertical direction cannot occur.

When the overturning table plate 24 is overturned, the slider 234 and the lap joint rod 233 are overturned together with the overturning table plate 24. Since two ends of the lap joint rod 233 are rotationally arranged on the support table 23, the horizontal deflection cannot occur when the lap joint rod 233 rotates, and thus thee horizontal deflection of the overturning table plate 24 is limited when the turnover table 24 is overturned.

The slider 234 cooperates with the sliding rails 242 to limit the only vertical lifting and vertical overturning of the overturning table plate 24, so as to avoid the phenomenon that the overturning table plate 24 cannot ascend, descend and be overturned in place caused by vertical inclination or horizontal deflection when changing the state.

Referring to Fig. 1, as a specific example of the vehicle auxiliary instrument panel installation assembly provided by the disclosure, the free end of the overturning table plate 24 is provided with a cover 222, which moves together with the overturning table plate 24. When the overturning table plate 24 is in the closed state, the cover 222 is connected with the support table 23 to cover the gap between the support table 23 and the placement table 22, thereby preventing impurities from falling into the space between the support table 23 and the placement table 22 to avoid affecting the ascending and descending of the overturning table plate 24.

Specifically, the cover 222 is provided with a clasp groove. When a user lifts and overturns the overturning table plate 24, the hand can be placed at the clasp groove for easy operation.

Referring to Fig. 13, as a specific example of the vehicle auxiliary instrument panel mounting assembly provided by the disclosure, the support table 23 includes a support plate 231 and a connecting plate 232, the support plate 231 is located on one side of the placement table 22, the connecting plate 232 is arranged on a top of the support plate 231, the connecting plate 232 is located on one side of the lap joint rod 233, the connecting plate 232 is bent towards the lap joint rod 233 along two ends in an axial direction of the lap joint rod 233, and the lap joint rod 233 is connected at the bending position.

When the overturning table plate 24 is in a vertical state, a bottom surface of the cover 222 is connected with a top surface of the support plate 231, and the cover 222 covers the exterior of the connecting plate 232.

Referring to Fig. 1, as a specific example of the vehicle auxiliary instrument panel mounting assembly provided by the disclosure, a plurality of accommodating cavities 221 for placing articles are arranged on a placement surface of the placement table 22. Specifically, the plurality of accommodating cavities 221 may have different structures, and are designed to be of different shapes to meet the demand of placing different articles.

The overturning table plate 24 in the expansion state is mainly used to support larger objects such as laptops and books. For rear passengers, if the overturning table plate 24 in the expansion state is lower, the passengers need to bend over when using the overturning table plate 24 for work, which may affect the comfort of the passengers and make the use of the overturning table plate 24 inconvenient.

In order to solve the above problem, as a specific example of the vehicle auxiliary instrument panel mounting assembly provided by the disclosure, a rotating shaft 25 and a support component 60 are arranged inside the placement table, referring to Fig. 9 and Fig. 10.

Specifically, a second housing 29 is also arranged inside the placement table 22, and the support component 60, the rotating shaft 25 and the accommodating cavities 221 are all located in the second housing 29. The rotating shaft 25 is arranged close to a top surface of the storage table 21, and the rotating shaft 25 passes through the second housing 29 and is connected with the first housing 50.

The placement table 22 can be overturned relative to the storage table 21 along the rotating shaft 25. The placement table 22 has a buckled state in which the placement table 22 is overturned relative to the storage table 21 until the placement surface is perpendicular to the top surface of the storage table 21. The placement table 22 also has an open state in which the placement table 22 is overturned relative to the storage table 21 until the placement surface is parallel to the top surface of the storage table 21. When the placement table 22 is in the open state, the support component 60 is used to support the placement table 22.

Specifically, the support component 60 includes a gas strut 61 and a support block 62. A fixed end of the gas strut 61 is fixedly connected with the first housing 50, and a lifting end of the gas strut 61 is fixedly connected with the second housing 29. One end of the support block 62 is hinged with the first housing 50, the other end of the support block 62 is a free end, and the support block 62 can swing along a hinge point.

Fastening blocks 63 connected with the first housing 50 are respectively arranged at two sides of a hinged end of the support block 62, and the fastening blocks 63 are used to fix the support block 62 so that the support block 62 can remain stable without an external force.

The placement table 22 can be overturned upwards manually. During overturning, the gas strut 61 struts to support the placement table 22. After the placement table 22 is overturned to reach a stable state, the support block 62 is manually pushed from an opening of the placement table 22, so that the free end of the support block 62 props against the second housing 29 to enable the placement table 22 to be fixed.

Referring to Fig. 2 and Fig. 5 and Fig. 9, on the basis of the above example, the side surface of the placement table 22 is provided with a second clasp 27, and specifically, the second clasp 27 is arranged on the panel 223. The second clasp 27 extends into the interior of the placement table 22, and an extension part is provided with a first hook 28. The interior of the storage table 21 is provided with a second hook 51 which extends into the interior of the placement table 22 and is hooked with the first hook 28. Specifically, the second hook 51 is arranged on the first housing 50.

When the placement table 22 is in the buckled state, the side surface, on which the second clasp 27 is located, of the placement 22 and the board surface of the panel 223 are parallel to the top surface of the storage table 21, and the first hook 28 is hooked with the second hook 51. When the placement table 22 is in the open state, the first hook 28 is separated from the second hook 51.

By manually pulling the second clasp 27 upwards, the first hook 28 can be separated from the second hook 51, and thus the limitation on the first hook 28 can be released. The gas strut 61 struts to support the opened placement table 22. By pressing the panel 223 downwards, the placement table 22 can be overturned. When the first hook 28 is hooked with the second hook 51 again, the placement table 22 is buckled.

The first hook 28 is hooked with the second hook 51 to limit that the placement table 22 is in the buckled state. Even when being subjected to external forces such as vibration and turbulence, the placement table 22 cannot be overturned, thereby avoiding the falling of articles placed in the accommodating cavities 221.

The placement table 22 is overturned by 90 degrees to be in the open state, the height of the placement surface is increased, and the height of the expanded overturning table plate 24 is increased, so that the comfort for work of the rear passengers is improved.

The disclosure also provides a vehicle, including the above vehicle auxiliary instrument panel mounting assembly.

The beneficial effects of the vehicle provided by the disclosure are the same as those of the vehicle auxiliary instrument panel mounting assembly, which will not be described in detail here.

The term "an example", "examples" or "one or more examples" herein means that the specific features, structures or features described in combination with the examples are included in at least one of the examples of the disclosure. In addition, it should be noted that the exemplary words "in an example" here do not necessarily refer to the same example.

A large number of specific details are described in the specification provided here. However, it can be understood that the examples of the disclosure can be practiced without these specific details. In some instances, well-known methods, structures and techniques are not shown in detail so as not to obscure the understanding of the specification.

In the claims, any reference numeral between parentheses shall not be constructed as a limitation on the claims. The word "comprise" does not exclude the existence of elements or steps not listed in the claims. The word "a/an" or "one" before a component does not exclude the existence of multiple such components. The words "first", "second", and "third" do not indicate any order when in use. These words can be interpreted as names.

The above descriptions are only preferred examples of the disclosure and are not intended to limit the disclosure. Any modification, equivalent replacement and improvement made within the disclosure shall be included in the protection scope, which is defined by the appended claims .

## Claims

1. A vehicle auxiliary instrument panel mounting assembly, comprising
a floor (10), which is provided with a chute (11) extending in a front-rear direction of a vehicle body, wherein a wall of the chute (11) is provided with at least two groups of locking holes spaced in an extension direction of the chute (11), and the floor (10) is provided with limiting parts (13) in one-to-one corresponding to the at least two groups of locking holes; and
an auxiliary instrument panel (20), wherein a bottom of the auxiliary instrument panel (20) is located in the chute (11) and can move along the chute (11), a front side plate or a rear side plate of the auxiliary instrument panel (20) is provided with a first clasp (26), a locking part (30) connected with the first clasp (26) is arranged inside the auxiliary instrument panel (20) and is inserted into one group of the locking holes, the locking part (30) has an unlocking state in which the locking part (30) moves to be separated from one group of the locking holes due to pulling of the first clasp (26), and the locking part (30) also has a locking state in which the locking part (30) is locked in one group of the locking holes due to contact with the limiting parts (13).

2. The vehicle auxiliary instrument panel mounting assembly according to claim 1, wherein the locking part (30) comprises a rotating part (31) and a first locking block (32) connected with the rotating part (31); and the rotating part (31) is used to drive the first locking block (32) to rotate so that the first locking block (32) is separated from the locking hole or inserted into the locking hole.

3. The vehicle auxiliary instrument panel mounting assembly according to claim 2, wherein
the first clasp (26) is connected with the locking part (30) through a connecting part (40); the connecting part (40) is provided with a first oblique plane (411) on a left or right side of the rotating part (31), and the first oblique plane (411) inclines from the periphery of the rotating part (31) to the center of the rotating part (31); and
when the connecting part (40) moves to the first clasp (26), the first oblique plane (411) is used to abut against the rotating part (31) to push the rotating part (31) to rotate towards a direction away from the locking hole.

4. The vehicle auxiliary instrument panel mounting assembly according to claim 2, wherein each of the limiting parts (13) is provided with a second oblique plane (131) which is used to abut against the rotating part (31) to limit the movement of the rotating part (31) in the front-rear direction of the vehicle body.

5. The vehicle auxiliary instrument panel mounting assembly according to claim 4, wherein
the rotating part (31) is provided with a first elastic element (37), one end of the first elastic element (37) is fixed on the rotating part (31), and the other end of the first elastic element (37) is connected with an inner wall of the auxiliary instrument panel (20); and
when the auxiliary instrument panel (20) moves to a bottom of the rotating part (31) and is in contact with one of the limiting parts (13), the first elastic element (37) is used to pull the rotating part (31) to rotate towards a direction close to the locking hole.

6. The vehicle auxiliary instrument panel mounting assembly according to claim 2, wherein each group of the locking holes comprises a first locking hole (121) and a second locking hole (122) respectively formed in one side wall of the chute (11), and a third locking hole (123) formed in the other side wall of the chute (11); the first locking block (32) is used to insert into the first locking hole (121); and
the locking part (30) further comprises a second locking block (34) used to insert into the second locking hole (122), and a third locking block (35) used to insert into the third locking hole (123).

7. The vehicle auxiliary instrument panel mounting assembly according to claim 6, wherein
a second elastic element (36) is connected between the second locking block (34) and the third locking block (35), and the second elastic element (36) is used to drive the second locking block (34) and the third locking block (35) to rotate so that the second locking block (34) and the third locking block (35) are separated from the second locking hole (122) and the third locking hole (123) respectively;
the connecting part (40) is provided with two pressing blocks (42) in sliding connection with a top surface of the second locking block (34) and a top surface of the third locking block (35) respectively, and the two pressing blocks (42) can slide towards the first clasp (26) to be separated from the second locking block (34) and the third locking block (35) respectively; and
the two pressing blocks (42) used to respectively abut against the second locking block (34) and the third locking block (35) to limit that the second locking block (34) and the third locking block (35) rotate to be separated from the second locking hole (122) and the third locking hole (123).

8. The vehicle auxiliary instrument panel mounting assembly according to claim 7, wherein the pressing blocks (42) are provided with third oblique planes (421) obliquely inclining upwards, and the two third oblique planes (421) are used to connect with a side surface, close to the first clasp (26), of the second locking block (34), and a side surface, close to the first clasp (26), of the third locking block (35) in a pressing manner respectively, so that the second locking block (34) and the third locking block (35) rotate, and are inserted into the second locking hole (122) and the third locking hole (123) respectively.

9. The vehicle auxiliary instrument panel mounting assembly according to claim 7, wherein the third locking block (35) is located between the first locking block (32) and the second locking block (34); a connecting plate (38) connected with the connecting part (40) is arranged on one side, close to the first clasp (26), of the second locking block (34);
a third elastic element (39) extending in the front-rear direction of the vehicle body is arranged between one end, connected with the first clasp (26), of the connecting part (40) and the connecting plate (38); and
the connecting part (40) is also provided with an abutting block (43), in the unlocking state, the abutting block (43) abuts against a side surface of the rotating part (31), and in the locking state, the abutting block (43) is separated from the rotating part (31).

10. The vehicle auxiliary instrument panel mounting assembly according to any one of claims 1-9, wherein the auxiliary instrument panel (20) comprises a storage table (21) and a placement table (22) connected with a rear side of the storage table (21); the first clasp (26) is arranged on a front side plate of the storage table (21);
a left side and/or a right side of the placement table (22) are/is provided with a support table (23);
the placement table (22) is further connected with an overturning table plate (24) which can be overturned relative to the placement table (22); the overturning table plate (24) has an expansion state in which the overturning table plate (24) ascends and is overturned relative to the placement table (22) until a plate surface of overturning table plate (24) is parallel to a placement surface of the placement table (22); the overturning table plate (24) also has a closed state in which the overturning table plate (24) is overturned and descends relative to the placement table (22) until the plate surface is perpendicular to the placement surface of the placement table (22); and when the overturning table plate (24) is in the expansion state, one end of the overturning table plate (24) is in lap joint with the support table (23), and the other end of the overturning table plate (24) is a free end and extends to the exterior of the placement table (22).

11. The vehicle auxiliary instrument panel mounting assembly according to claim 10, wherein the overturning table plate (24) is provided with a lap joint block (241), and a top of the support table (23) is provided with an overturning part; when the overturning table plate (24) ascends until the lap joint block (241) is in contact with the overturning part, the lap joint block (241) abuts against the overturning part to limit the ascending of the overturning table plate (24); and when the overturning table plate (24) is in the expansion state, the lap joint block (241) is in lap joint with the overturning part, and a side surface of the overturning table plate (24) abuts against a side surface of the placement table (22).

12. The vehicle auxiliary instrument panel mounting assembly according to claim 10, wherein a rotating shaft (25) and a support component (60) are arranged inside the placement table (22); the placement table (22) can be overturned relative to the storage table (23) along the rotating shaft (25); the placement table (22) has a buckled state in which the placement table (22) is overturned relative to the storage table (23) until the placement surface is perpendicular to a top surface of the storage table (23), and the placement table (22) also has an open state in which the placement table (22) is overturned relative to the storage table (23) until the placement surface is parallel to the top surface of the storage table (23); and when the placement table (22) is in the open state, the support component (60) is used to support the placement table (22).

13. The vehicle auxiliary instrument panel mounting assembly according to claim 12, wherein the support component (60) comprises:
a gas strut (61) where a fixed end of the gas strut (61) is fixedly connected with the interior of the storage table (23), and a lifting end of the gas strut (61) is fixedly connected with the interior of the placement table (22); and
a support block (62) where one end of the support block (62) is arranged inside the storage table (23) in a hinging manner, the other end of the support block (62) is a free end, the free end abuts against the interior of the placement table (22) when the placement table (22) is in the open state, and the support block (62) is used to support the placement table (22).

14. The vehicle auxiliary instrument panel mounting assembly according to claim 12, wherein a second clasp (27) is arranged on the side surface of the placement table (22) and extends to the interior of the placement table (22), and an extension part is provided with a first hook (28);
the interior of the storage table (23) is provided with a second hook (51) which extends into the interior of the placement table (22) and is hooked with the first hook (28); and
when the placement table (22) is in the buckled state, the side surface, on which the second clasp (27) is located, of the placement table (22) is parallel to the top surface of the storage table (23), and the first hook (28) is hooked with the second hook (51).

15. A vehicle, comprising the vehicle auxiliary instrument panel mounting assembly according to any one of claims 1-14.

## Patentansprüche

1. Montagebaugruppe für ein Hilfsarmaturenbrett für ein Fahrzeug, wobei die Montagebaugruppe aufweist:
einen Boden (10), der mit einer Rinne (11) versehen ist, die sich in einer Vorwärts-Rückwärts-Richtung einer Fahrzeugkarosserie erstreckt, wobei eine Wand der Rinne (11) mit mindestens zwei Gruppen von Verriegelungslöchern versehen ist, die in einer Erstreckungsrichtung der Rinne (11) beabstandet sind, und der Boden (10) mit Begrenzungsteilen (13) versehen ist, die eins zu eins den mindestens zwei Gruppen von Verriegelungslöchern entsprechen; und
ein Hilfsarmaturenbrett (20), wobei ein Boden des Hilfsarmaturenbretts (20) in der Rinne (11) angeordnet ist und sich entlang der Rinne (11) bewegen kann, eine vordere Seitenplatte oder eine hintere Seitenplatte des Hilfsarmaturenbretts (20) mit einer ersten Spange (26) versehen ist, ein mit der ersten Spange (26) verbundenes Verriegelungsteil (30) innerhalb des Hilfsarmaturenbretts (20) angeordnet ist und in eine Gruppe der Verriegelungslöcher eingesetzt ist, das Verriegelungsteil (30) einen Entriegelungszustand hat, in dem das Verriegelungsteil (30) sich bewegt, um von einer Gruppe der Verriegelungslöcher aufgrund eines Ziehens der ersten Spange (26) getrennt zu werden, und das Verriegelungsteil (30) auch einen Verriegelungszustand hat, in dem das Verriegelungsteil (30) in einer Gruppe der Verriegelungslöcher aufgrund des Kontakts mit den Begrenzungsteilen (13) verriegelt ist.

2. Montagebaugruppe für ein Hilfsarmaturenbrett für ein Fahrzeug nach Anspruch 1, wobei das Verriegelungsteil (30) ein Drehteil (31) und einen ersten Verriegelungsblock (32) aufweist, der mit dem Drehteil (31) verbunden ist; und das Drehteil (31) verwendet wird, um den ersten Verriegelungsblock (32) anzutreiben, damit er sich dreht, so dass der erste Verriegelungsblock (32) vom Verriegelungsloch getrennt oder in das Verriegelungsloch eingeführt wird.

3. Montagebaugruppe für ein Hilfsarmaturenbrett für ein Fahrzeug nach Anspruch 2, wobei
die erste Spange (26) mit dem Verriegelungsteil (30) durch ein Verbindungsteil (40) verbunden ist; das Verbindungsteil (40) mit einer ersten schrägen Ebene (411) an einer linken oder rechten Seite des Drehteils (31) versehen ist, und die erste schräge Ebene (411) vom Umfang des Drehteils (31) zur Mitte des Drehteils (31) geneigt ist; und
wenn sich das Verbindungsteil (40) zur ersten Spange (26) bewegt, die erste schräge Ebene (411) verwendet wird, um mit dem Drehteil (31) in Anlage zu kommen, um das Drehteil (31) zu einer Drehung in eine Richtung weg vom Verriegelungsloch zu drücken.

4. Montagebaugruppe für ein Hilfsarmaturenbrett für ein Fahrzeug nach Anspruch 2, wobei jedes der Begrenzungsteile (13) mit einer zweiten schrägen Ebene (131) versehen ist, die dazu dient, mit dem Drehteil (31) in Anlage zu kommen, um die Bewegung des Drehteils (31) in der Vorwärts-Rückwärts-Richtung der Fahrzeugkarosserie zu begrenzen.

5. Montagebaugruppe für ein Hilfsarmaturenbrett für ein Fahrzeug nach Anspruch 4, wobei
das Drehteil (31) mit einem ersten elastischen Element (37) versehen ist, ein Ende des ersten elastischen Elements (37) an dem Drehteil (31) befestigt ist und das andere Ende des ersten elastischen Elements (37) mit einer Innenwand des Hilfsarmaturenbretts (20) verbunden ist; und
wenn sich das Hilfsarmaturenbrett (20) zu einer Unterseite des Drehteils (31) bewegt und in Kontakt mit einem der Begrenzungsteile (13) ist, das erste elastische Element (37) verwendet wird, um das Drehteil (31) zu ziehen, damit es sich in eine Richtung nahe zum Verriegelungsloch dreht.

6. Montagebaugruppe für ein Hilfsarmaturenbrett für ein Fahrzeug nach Anspruch 2, wobei jede Gruppe von Verriegelungslöchern ein erstes Verriegelungsloch (121) und ein zweites Verriegelungsloch (122), die jeweils in einer Seitenwand der Rinne (11) ausgebildet sind, und ein drittes Verriegelungsloch (123), das in der anderen Seitenwand der Rinne (11) ausgebildet ist, aufweist; der erste Verriegelungsblock (32) zum Einsetzen in das erste Verriegelungsloch (121) verwendet wird; und
das Verriegelungsteil (30) weiter einen zweiten Verriegelungsblock (34), der zum Einsetzen in das zweite Verriegelungsloch (122) verwendet wird, und einen dritten Verriegelungsblock (35), der zum Einsetzen in das dritte Verriegelungsloch (123) verwendet wird, aufweist.

7. Montagebaugruppe für ein Hilfsarmaturenbrett für ein Fahrzeug nach Anspruch 6, wobei
ein zweites elastisches Element (36) zwischen den zweiten Verriegelungsblock (34) und den dritten Verriegelungsblock (35) verbunden ist, und das zweite elastische Element (36) dazu verwendet wird, den zweiten Verriegelungsblock (34) und den dritten Verriegelungsblock (35) zu einer Drehung anzutreiben, so dass der zweite Verriegelungsblock (34) und der dritte Verriegelungsblock (35) von dem zweiten Verriegelungsloch (122) beziehungsweise dem dritten Verriegelungsloch (123) getrennt werden;
das Verbindungsteil (40) mit zwei Druckblöcken (42) versehen ist, die in Gleitverbindung mit einer oberen Fläche des zweiten Verriegelungsblocks (34) beziehungsweise einer oberen Fläche des dritten Verriegelungsblocks (35) stehen, und die beiden Druckblöcke (42) in Richtung zur ersten Spange (26) hin gleiten können, um von dem zweiten Verriegelungsblock (34) beziehungsweise dem dritten Verriegelungsblock (35) getrennt zu werden; und
die beiden Druckblöcke (42) verwendet werden, um jeweils mit dem zweiten Verriegelungsblock (34) und dem dritten Verriegelungsblock (35) in Anlage zu kommen, um die Drehung des zweiten Verriegelungsblocks (34) und des dritten Verriegelungsblocks (35) zu begrenzen, um von dem zweiten Verriegelungsloch (122) und dem dritten Verriegelungsloch (123) getrennt zu werden.

8. Montagebaugruppe für ein Hilfsarmaturenbrett für ein Fahrzeug nach Anspruch 7, wobei die Druckblöcke (42) mit dritten schrägen Ebenen (421) versehen sind, die schräg nach oben geneigt sind, und die beiden dritten schrägen Ebenen (421) dazu verwendet werden, sich mit einer Seitenfläche nahe der ersten Spange (26) des zweiten Verriegelungsblocks (34) und einer Seitenfläche nahe der ersten Spange (26) des dritten Verriegelungsblocks (35) in einer drückenden Weise zu verbinden, so dass sich der zweite Verriegelungsblock (34) und der dritte Verriegelungsblock (35) drehen, und in das zweite Verriegelungsloch (122) beziehungsweise das dritte Verriegelungsloch (123) einsetzt werden.

9. Montagebaugruppe für ein Hilfsarmaturenbrett für ein Fahrzeug nach Anspruch 7, wobei der dritte Verriegelungsblock (35) zwischen dem ersten Verriegelungsblock (32) und dem zweiten Verriegelungsblock (34) angeordnet ist; eine mit dem Verbindungsteil (40) verbundene Verbindungsplatte (38) auf einer Seite des zweiten Verriegelungsblocks (34) nahe der ersten Spange (26) angeordnet ist;
ein drittes elastisches Element (39), das sich in Vorwärts-Rückwärts-Richtung der Fahrzeugkarosserie erstreckt, zwischen einem mit der ersten Spange (26) verbundenen Ende des Verbindungsteils (40) und der Verbindungsplatte (38) angeordnet ist; und
das Verbindungsteil (40) auch mit einem Anschlagblock (43) versehen ist, wobei der Anschlagblock (43) im Entriegelungszustand mit einer Seitenfläche des Drehteils (31) in Anlage kommt und im Verriegelungszustand von dem Drehteil (31) getrennt ist.

10. Montagebaugruppe für ein Hilfsarmaturenbrett für ein Fahrzeug nach einem der Ansprüche 1 bis 9, wobei das Hilfsarmaturenbrett (20) einen Ablagetisch (21) und einen mit einer Rückseite des Ablagetisches (21) verbundenen Platzierungstisch (22) aufweist; die erste Spange (26) an einer vorderen Seitenplatte des Ablagetisches (21) angeordnet ist;
eine linke Seite und/oder eine rechte Seite des Ablagetisches (22) mit einem Auflagetisch (23) versehen sind/ist;
der Platzierungstisch (22) weiter mit einer Kipptischplatte (24) verbunden ist, die relativ zu dem Platzierungstisch (22) gekippt werden kann; die Kipptischplatte (24) einen Expansionszustand hat, in dem die Kipptischplatte (24) relativ zu dem Platzierungstisch (22) ansteigt und gekippt wird, bis eine Plattenoberfläche der Kipptischplatte (24) parallel zu einer Platzierungsoberfläche des Platzierungstisches (22) ist; die Kipptischplatte (24) auch einen geschlossenen Zustand hat, in dem die Kipptischplatte (24) relativ zu dem Platzierungstisch (22) gekippt wird und sich absenkt, bis die Plattenoberfläche senkrecht zu der Platzierungsoberfläche des Platzierungstisches (22) ist; und wenn sich die Kipptischplatte (24) im Expansionszustand befindet, ein Ende der Kipptischplatte (24) in Überlappungsverbindung mit dem Auflagetisch (23) ist, und das andere Ende der Kipptischplatte (24) ein freies Ende ist und sich zur Außenseite des Platzierungstisches (22) erstreckt.

11. Montagebaugruppe für ein Hilfsarmaturenbrett für ein Fahrzeug nach Anspruch 10, wobei die Kipptischplatte (24) mit einem Überlappungsverbindungsblock (241) versehen ist und eine Oberseite des Auflagetisches (23) mit einem Kippteil versehen ist; wenn die Kipptischplatte (24) ansteigt, bis der Überlappungsverbindungsblock (241) in Kontakt mit dem Kippteil ist, der Überlappungsverbindungsblock (241) mit dem Kippteil in Anlage kommt, um das Ansteigen der Kipptischplatte (24) zu begrenzen; und wenn sich die Kipptischplatte (24) im Expansionszustand befindet, sich der Überlappungsverbindungsblock (241) in Überlappungsverbindung mit dem Kippteil befindet, und eine Seitenfläche der Kipptischplatte (24) mit einer Seitenfläche des Platzierungstisches (22) in Anlage kommt.

12. Montagebaugruppe für ein Hilfsarmaturenbrett für ein Fahrzeug nach Anspruch 10, wobei im Inneren des Platzierungstisches (22) eine Drehwelle (25) und ein Stützelement (60) angeordnet sind; der Platzierungstisch (22) relativ zum Auflagetisch (23) entlang der Drehwelle (25) gekippt werden kann; der Platzierungstisch (22) einen geknickten Zustand aufweist, in dem der Platzierungstisch (22) relativ zu dem Auflagetisch (23) gekippt wird, bis die Platzierungsfläche senkrecht zu einer oberen Fläche des Auflagetisches (23) ist, und der Platzierungstisch (22) auch einen offenen Zustand aufweist, in dem der Platzierungstisch (22) relativ zu dem Lagertisch (23) gekippt wird, bis die Platzierungsfläche parallel zu der oberen Fläche des Lagertisches (23) ist; und wenn sich der Platzierungstisch (22) in dem offenen Zustand befindet, das Stützelement (60) verwendet wird, um den Platzierungstisch (22) zu stützen.

13. Montagebaugruppe für ein Hilfsarmaturenbrett für ein Fahrzeug nach Anspruch 12, wobei das Stützelement (60) aufweist:
eine Gasdruckfeder (61), wobei ein festes Ende der Gasdruckfeder (61) fest mit dem Inneren des Auflagetisches (23) verbunden ist und ein Hubende der Gasdruckfeder (61) fest mit dem Inneren des Platzierungstisches (22) verbunden ist; und
einen Stützblock (62), wobei ein Ende des Stützblocks (62) im Inneren des Ablagetisches (23) gelenkig angeordnet ist, das andere Ende des Stützblocks (62) ein freies Ende ist, das freie Ende im geöffneten Zustand des Ablagetisches (22) mit dem Inneren des Ablagetisches (22) in Anlage kommt, und der Stützblock (62) zum Abstützen des Ablagetisches (22) verwendet wird.

14. Montagebaugruppe für ein Hilfsarmaturenbrett für ein Fahrzeug nach Anspruch 12, wobei eine zweite Spange (27) an der Seitenfläche des Platzierungstischs (22) angeordnet ist und sich in das Innere des Platzierungstischs (22) erstreckt und ein Verlängerungsteil mit einem ersten Haken (28) versehen ist;
das Innere des Auflagetisches (23) mit einem zweiten Haken (51) versehen ist, der sich in den Innenraum des Platzierungstischs (22) erstreckt und mit dem ersten Haken (28) verhakt ist; und
wenn sich der Platzierungstisch (22) im geknickten Zustand befindet, die Seitenfläche des Platzierungstisches (22), an der sich die zweite Klammer (27) befindet, parallel zur oberen Fläche des Auflagetisches (23) ist und der erste Haken (28) mit dem zweiten Haken (51) verhakt ist.

15. Fahrzeug, das die Montagebaugruppe für ein Hilfsarmaturenbrett für ein Fahrzeug nach einem der Ansprüche 1 bis 14 aufweist.

## Revendications

1. Ensemble de montage de tableau de bord auxiliaire pour véhicule, comprenant :
un plancher (10), lequel est doté d'une goulotte (11) s'étendant dans une direction avant-arrière d'une carrosserie de véhicule, dans lequel une paroi de la goulotte (11) est dotée d'au moins deux groupes de trous de verrouillage espacés dans une direction d'extension de la goulotte (11), et le plancher (10) est doté de parties de limitation (13) dans une relation de unà-un correspondant à au moins deux groupes de trous de verrouillage, et
un tableau de bord auxiliaire (20), dans lequel un fond du tableau de bord auxiliaire (20) est situé dans la goulotte (11) et peut se déplacer le long de la goulotte (11), une plaque côté avant ou une plaque côté arrière du tableau de bord auxiliaire (20) est dotée d'un premier fermoir (26) ; une partie de verrouillage (30) reliée au premier fermoir (26) est agencée dans le tableau de bord auxiliaire (20), et est introduite dans un groupe des trous de verrouillage ; la partie de verrouillage (30) présente un état de déverrouillage, où la partie de verrouillage (30) se déplace pour se désolidariser du un groupe des trous de verrouillage dû à la traction sur le premier fermoir (26), et la partie de verrouillage (30) présente également un état de verrouillage, où la partie de verrouillage (30) est verrouillée dans un groupe des trous de verrouillage dû au contact avec les parties de limitation (13).

2. Ensemble de montage de tableau de bord auxiliaire pour véhicule selon la revendication 1, dans lequel la partie de verrouillage (30) comprend une partie rotative (31) et un premier bloc de verrouillage (32) relié à la partie rotative (31), et la partie rotative (31) est utilisée pour entraîner le premier bloc de verrouillage (32) en rotation de sorte que le premier bloc de verrouillage (32) est désolidarisé du trou de verrouillage ou introduit dans le trou de verrouillage.

3. Ensemble de montage de tableau de bord auxiliaire pour véhicule selon la revendication 2, dans lequel
le premier fermoir (26) est relié à la première partie de verrouillage (30) par le biais d'une partie de liaison (40) ; la partie de liaison (40) est dotée d'un premier plan oblique (411) sur un côté gauche ou droit de la partie rotative (31), et le premier plan oblique (411) s'incline de la périphérie de la partie rotative (31) vers le centre de la partie rotative (31), et
lorsque la partie de liaison (40) se déplace vers le premier fermoir (26), le premier plan oblique (411) est utilisé pour abouter contre la partie rotative (31) pour pousser la partie rotative (31) et la faire tourner vers une direction s'écartant du trou de verrouillage.

4. Ensemble de montage de tableau de bord auxiliaire pour véhicule selon la revendication 2, dans lequel chacune des parties de limitation (13) est dotée d'un second plan oblique (131), lequel est utilisé pour abouter contre la partie rotative (31) afin de limiter le déplacement de la partie rotative (31) dans la direction avant-arrière de la carrosserie de véhicule.

5. Ensemble de montage de tableau de bord auxiliaire pour véhicule selon la revendication 4, dans lequel
la partie rotative (31) est dotée d'un premier élément élastique (37), une extrémité du premier élément élastique (37) est fixée sur la partie rotative (31), et l'autre extrémité du premier élément élastique (37) est reliée à une paroi intérieure du tableau de bord auxiliaire (20), et
lorsque le tableau de bord auxiliaire (20) se déplace vers un fond de la partie rotative (31) et est en contact avec une des parties de limitation (13), le premier élément élastique (37) est utilisé pour tirer la partie rotative (31) et la faire tourner vers une direction proche du trou de verrouillage.

6. Ensemble de montage de tableau de bord auxiliaire pour véhicule selon la revendication 2, dans lequel chaque groupe des trous de verrouillage comprend un premier trou de verrouillage (121) et un deuxième trou de verrouillage (122) formés respectivement dans une paroi latérale de la goulotte (11), et un troisième trou de verrouillage (123) formé dans l'autre paroi latérale de la goulotte (11) ; le premier bloc de verrouillage (32) est utilisé pour l'introduction dans le premier trou de verrouillage (121), et
la partie de verrouillage (30) comprend en outre un deuxième bloc de verrouillage (34) utilisé pour l'introduction dans le deuxième trou de verrouillage (122), et un troisième bloc de verrouillage (35) utilisé pour l'introduction dans le troisième trou de verrouillage (123).

7. Ensemble de montage de tableau de bord auxiliaire pour véhicule selon la revendication 6, dans lequel
un second élément élastique (36) est relié entre le deuxième bloc de verrouillage (34) et le troisième bloc de verrouillage (35), et le second élément élastique (36) est utilisé pour entraîner le deuxième bloc de verrouillage (34) et le troisième bloc de verrouillage (35) en rotation de sorte que le deuxième bloc de verrouillage (34) et le troisième bloc de verrouillage (35) sont désolidarisés respectivement du deuxième trou de verrouillage (122) et du troisième trou de verrouillage (123) ;
la partie de liaison (40) est dotée de deux blocs de pression (42) reliés respectivement par coulissement à une surface supérieure du deuxième bloc de verrouillage (34) et une surface supérieure du troisième bloc de verrouillage (35), et les deux blocs de pression (42) peuvent coulisser vers le premier fermoir (26) pour être désolidarisés respectivement du deuxième bloc de verrouillage (34) et du troisième bloc de verrouillage (35), et
les deux blocs de pression (42) sont utilisés pour abouter respectivement contre le deuxième bloc de verrouillage (34) et le troisième bloc de verrouillage (35) afin de limiter la rotation du deuxième bloc de verrouillage (34) et du troisième bloc de verrouillage (35) les désolidarisant du deuxième trou de verrouillage (122) et du troisième trou de verrouillage (123).

8. Ensemble de montage de tableau de bord auxiliaire pour véhicule selon la revendication 7, dans lequel les blocs de pression (42) sont dotés de troisièmes plans obliques (421) avec une inclinaison oblique ascendante, et les deux troisièmes plans obliques (421) sont utilisés pour une liaison respectivement avec une surface latérale, proche du premier fermoir (26), du deuxième bloc de verrouillage (34), et une surface latérale, proche du premier fermoir (26), du troisième bloc de verrouillage (35) d'une manière appliquant une pression de sorte que le deuxième bloc de verrouillage (34) et le troisième bloc de verrouillage (35) tournent et sont introduits respectivement dans le deuxième trou de verrouillage (122) et le troisième trou de verrouillage (123).

9. Ensemble de montage de tableau de bord auxiliaire pour véhicule selon la revendication 7, dans lequel le troisième bloc de verrouillage (35) est situé entre le premier bloc de verrouillage (32) et le deuxième bloc de verrouillage (34) ; une plaque de liaison (38) reliée à la partie de liaison (40) est agencée sur un côté, proche du premier fermoir (26), du deuxième bloc de verrouillage (34) ;
un troisième élément élastique (39) s'étendant dans la direction avant-arrière de la carrosserie de véhicule est agencé entre une extrémité, reliée au premier fermoir (26), de la partie de liaison (40) et de la plaque de liaison (38), et
la partie de liaison (40) est également dotée d'un bloc d'aboutement (43), dans l'état de déverrouillage, le bloc d'aboutement (43) aboute contre une surface latérale de la partie rotative (31), et dans l'état de verrouillage, le bloc d'aboutement (43) est désolidarisé de la partie rotative (31).

10. Ensemble de montage de tableau de bord auxiliaire pour véhicule selon l'une quelconque des revendications 1 à 9, dans lequel le tableau de bord auxiliaire (20) comprend une table de stockage (21) et une table de placement (22) reliée à un côté arrière de la table de stockage (21), le premier fermoir (26) est agencé sur une plaque côté avant de la table de stockage (21) ;
un côté gauche et/ou côté droit de la table de placement (22) est/sont dotés d'une table de support (23) ;
la table de placement (22) est en outre reliée à une plaque formant table basculante (24), laquelle peut être basculée par rapport à la table de placement (22) ; la plaque formant table basculante (24) présente un état déployé, où la plaque formant table basculante (24) monte et est basculée par rapport à la table de placement (22) jusqu'à ce qu'une surface de plaque de la plaque formant table basculante (24) soit parallèle à une surface de placement de la table de placement (22) ; la plaque formant table basculante (24) présente également un état fermé, où la plaque formant table basculante (24) est basculée et descend par rapport à la table de placement (22) jusqu'à ce que la surface de plaque soit perpendiculaire à la surface de placement de la table de placement (22) ; et lorsque la plaque formant table basculante (24) est dans l'état déployé, une extrémité de la plaque formant table basculante (24) forme un assemblage à recouvrement avec la table de support (23), et l'autre extrémité de la plaque formant table basculante (24) présente une extrémité libre et s'étend vers l'extérieur de la table de placement (22).

11. Ensemble de montage de tableau de bord auxiliaire pour véhicule selon la revendication 10, dans lequel la plaque formant table basculante (24) est dotée d'un bloc d'assemblage à recouvrement (241), et un dessus de la table de support (23) est doté d'une partie basculante ; lorsque la plaque formant table basculante (24) monte jusqu'à ce que le bloc d'assemblage à recouvrement (241) soit en contact avec la partie basculante, le bloc d'assemblage à recouvrement (241) aboute contre la partie basculante afin de limiter l'ascension de la plaque formant table basculante (24), et lorsque la plaque formant table basculante (24) est dans l'état déployé, le bloc d'assemblage à recouvrement (241) forme un assemblage à recouvrement avec la partie basculante, et une surface latérale de la plaque formant table basculante (24) aboute contre une surface latérale de la table de placement (22).

12. Ensemble de montage de tableau de bord auxiliaire pour véhicule selon la revendication 10, dans lequel un arbre tournant (25) et un composant de support (60) sont agencés dans la table de placement (22) ; la table de placement (22) peut être basculée par rapport à la table de stockage (23) le long de l'arbre tournant (25) ; la table de placement (22) présente un état déformé, où la table de placement (22) est basculée par rapport à la table de stockage (23) jusqu'à ce que la surface de placement soit perpendiculaire à une surface de dessus de la table de stockage (23), et la table de placement (22) présente également un état ouvert, où la table de placement (22) est basculée par rapport à la table de stockage (23) jusqu'à ce que la surface de placement soit parallèle à la surface de dessus de la table de stockage (23), et lorsque la table de placement (22) est dans l'état ouvert, le composant de support (60) est utilisé pour supporter la table de placement (22).

13. Ensemble de montage de tableau de bord auxiliaire pour véhicule selon la revendication 12, dans lequel le composant de support (60) comprend :
un vérin à gaz (61), où une extrémité fixe du vérin à gaz (61) est reliée, de manière fixe, à l'intérieur de la table de stockage (23), et une extrémité de levage (61) est reliée, de manière fixe, à l'intérieur de la table de placement (22), et
un support de bloc (62), où une extrémité du bloc de support (62) est agencée dans la table de stockage (23) d'une manière articulée, l'autre extrémité du bloc de support (62) est une extrémité libre, l'extrémité libre aboute contre l'intérieur de la table de placement (22) lorsque la table de placement (22) est dans l'état ouvert, et le bloc de support (62) est utilisé pour supporter la table de placement (22).

14. Ensemble de montage de tableau de bord auxiliaire pour véhicule selon la revendication 12, dans lequel un second fermoir (27) est agencé sur la surface latérale de la table de placement (22) et s'étend vers l'intérieur de la table de placement (22), et une partie d'extension est dotée d'un premier crochet (28) ;
l'intérieur de la table de stockage (23) est doté d'un second crochet (51), lequel s'étend jusque dans l'intérieur de la table de placement (22) et est accroché avec le premier crochet (28), et
lorsque la table de placement (22) se trouve dans l'état déformé, la surface latérale, sur laquelle se trouve le second fermoir (27), de la table de placement (22), est parallèle à la surface de dessus de la table de stockage (23), et le premier crochet (28) est accroché au second crochet (51).

15. Véhicule, comprenant l'ensemble de montage de tableau de bord auxiliaire pour véhicule selon l'une quelconque des revendications 1 à 14.
